# FASCICULE DE BREVET EUROPEEN

(11) **EP 2 791 928 B1**
(45) Date de publication et mention de la délivrance du brevet: **26.08.2020**
(21) Numéro de dépôt: 12810378.5
(22) Date de dépôt: 07.12.2012
(51) Int. Cl.: G08C 17/02, H04L 12/28

(54) **PROCÉDÉ D'INSTALLATION D'UN SYSTÈME DOMOTIQUE ET SYSTÈME DOMOTIQUE ASSOCIÉ**
VERFAHREN ZUR INSTALLATION EINES HEIMAUTOMATISIERUNGSSYSTEMS UND ENTSPRECHENDES HEIMAUTOMATISIERUNGSSYSTEM
METHOD OF INSTALLING A HOME-AUTOMATION SYSTEM AND ASSOCIATED HOME-AUTOMATION SYSTEM

(30) Priorité: 15.12.2011 FR 1161703
(43) Date de publication de la demande: 22.10.2014
(73) Titulaire: ORANGE, 75015 Paris (FR)
(72) Inventeur: DELBARY, Philippe, F-75014 Paris (FR); DUBOIS, Pierre-François, F-92330 Sceaux (FR); COTTET, Jean-Paul, F-75015 Paris (FR)
(86) Numéro de dépôt international: PCT/FR2012/052845
(87) Numéro de publication internationale: WO 2013/088035

(56) Documents cités:
- EP-A1- 2 107 537
- FR-A1- 2 912 821

## Description

La présente invention concerne un procédé d'installation d'un système domotique comprenant un dispositif central de commande et au moins un appareil électrique, par exemple une prise électrique, connecté au dispositif de commande.

Un tel dispositif est décrit par exemple dans la publication EP 2 107 537.

La domotique vise à apporter au sein d'une maison des solutions de confort, de sécurité et de communication. Elle nécessite la mise en réseau d'appareils électriques (volets, caméra, détecteurs, portes, chauffage, etc.) et l'installation d'une centrale intelligente programmable de commande.

Les opérations d'installation et de programmation de la centrale et de mise en réseau des appareils électriques s'avèrent relativement complexes pour l'utilisateur.

La présente invention vise à améliorer la situation.

A cet effet, l'invention concerne un procédé d'installation d'un système domotique comprenant un premier appareil électrique et un dispositif de commande, intégré dans ledit premier appareil électrique et pourvu de moyens de connexion à un réseau de téléphonie mobile, dans lequel il est prévu les étapes suivantes, réalisées par le dispositif de commande, suite à un raccordement de l'appareil électrique à une source d'alimentation électrique :
- réception, à travers le réseau de téléphonie mobile, d'un message de commande de démarrage en provenance d'un premier terminal de pilotage, ledit message contenant un numéro de téléphone associé au premier terminal,
- mémorisation du numéro de téléphone dudit premier terminal de pilotage ;
- attribution d'un rôle d'administrateur du système domotique au premier terminal de pilotage.

Grâce à l'invention, suite au raccordement de l'appareil électrique à une source d'alimentation électrique, il suffit à l'utilisateur d'envoyer un message de démarrage, tél qu'un message SMS, depuis son terminal mobile pour être enregistré en tant qu'administrateur du système domotique. Le dispositif de commande étant intégré dans l'appareil électrique, il n'est plus nécessaire de brancher séparément ce dispositif de commande au secteur. En outre, le simple envoi d'un message de démarrage permet ensuite d'enregistrer un terminal de pilotage administrateur du système domotique.

Avantageusement, suite à la réception d'un message de commande d'appairage à travers le réseau de téléphonie mobile, le dispositif de commande se met en mode d'appairage, établit une session de communication avec un deuxième appareil électrique et, lors de cette session, transmet au deuxième appareil des données d'accès au système domotique. Ces données d'accès au système domotique peuvent comprendre un identifiant de réseau local (correspondant au réseau local du système domotique) et une clé réseau de sécurité.

De la même manière pour appairer par exemple une deuxième prise à la première prise, il suffit à l'utilisateur d'envoyer un message d'appairage.

Dans un mode de réalisation particulier, suite à la réception par le dispositif de commande, à travers le réseau de téléphonie mobile, d'un message d'ajout d'un deuxième terminal de pilotage, ledit message contenant un numéro de téléphone associé au deuxième terminal, le dispositif de commande :
- vérifie que ledit message d'ajout a été émis par le premier terminal ayant le rôle d'administrateur ;
- mémorise le numéro de téléphone du deuxième terminal et
- attribue au deuxième terminal un rôle d'utilisateur.

L'invention concerne aussi un système domotique comprenant un premier appareil électrique commandé et adapté pour être raccordé à une source d'alimentation électrique et un dispositif de commande intégré dans le premier appareil électrique et pourvu de moyens de connexion à un réseau de téléphonie mobile, ledit dispositif de commande comprenant
- des moyens de réception, à travers le réseau de téléphonie mobile, d'un message de commande de démarrage en provenance d'un premier terminal de pilotage, ledit message contenant un numéro de téléphone associé au premier terminal,
- des moyens pour mémoriser le numéro de téléphone dudit premier terminal de pilotage et
- des moyens pour attribuer un rôle d'administrateur du système domotique au premier terminal de pilotage.

Selon un autre aspect matériel, l'invention a trait à un appareil électrique apte à être commandé et adapté pour être raccordé à une source d'alimentation électrique, l'appareil incluant un dispositif de commande pourvu de moyens de connexion à un réseau de téléphonie mobile, ledit dispositif de commande comprenant :
- des moyens (20, 22) de réception, à travers le réseau de téléphonie mobile, d'un message de commande de démarrage en provenance d'un premier terminal de pilotage (4), ledit message contenant un numéro de téléphone associé au premier terminal (4),
- des moyens (23, 27) pour mémoriser le numéro de téléphone dudit premier terminal de pilotage (4) et
- des moyens (23, 27) pour attribuer un rôle d'administrateur de l'appareil électrique au premier terminal de pilotage (4).

L'invention sera mieux comprise à l'aide de la description suivante d'un mode de réalisation particulier du procédé d'installation d'un système domotique et une forme de réalisation particulière du système domotique, selon l'invention, en référence aux dessins annexés sur lesquels :
- la figure 1 représente une vue schématique d'une prise électrique du système domotique, selon une forme de réalisation particulière de l'invention ;
- la figure 2A représente un schéma bloc fonctionnel d'un dispositif de commande intégré dans la prise de la figure 1, selon une forme de réalisation particulière de l'invention ;
- la figure 2B représente un schéma bloc fonctionnel d'un dispositif de commande intégré dans une prise secondaire, selon une forme de réalisation particulière de l'invention ;
- les figures 3 et 4 représentent des organigrammes d'étapes du procédé d'installation du système domotique de la figure 1, selon un mode de réalisation particulier de l'invention.

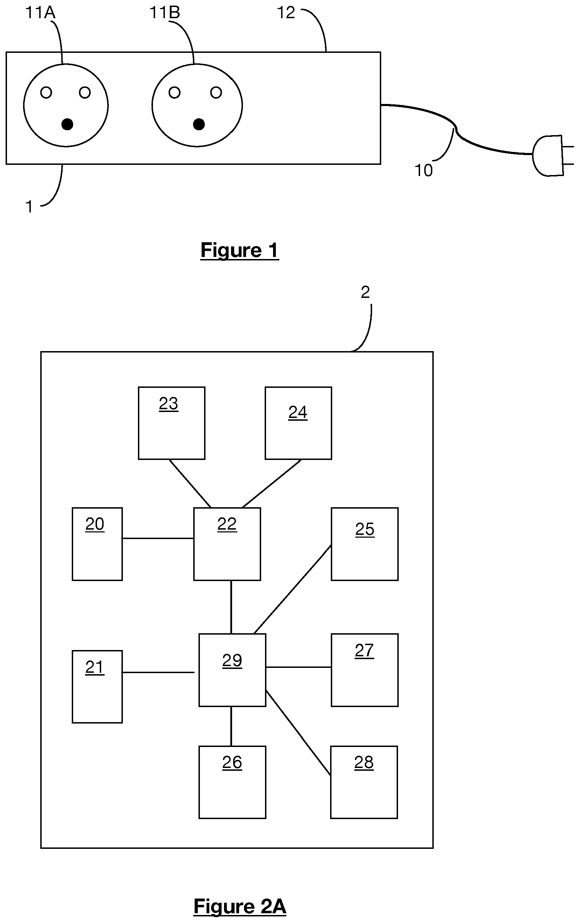

Sur la figure 1, on a représenté un système domotique comprenant une prise électrique principale 1 et un dispositif de commande 2, intégré dans la prise principale 1. En outre, le système domotique peut comprendre une ou plusieurs prises électriques supplémentaires, connectées en réseau, par liaison radio, à la prise principale 1. La mise en réseau d'une prise secondaire sera décrite plus loin dans la description du procédé.

D'emblée, on notera que par le terme « prise électrique » on entend désigner aussi bien une prise électrique élémentaire, disposant d'une seule prise électrique (ici femelle), qu'un boîtier multiprise comportant plusieurs prises électriques (ici femelles).

La prise principale 1 est ici un boîtier multiprise comprenant, de façon classique, un cordon électrique 10 de raccordement au secteur, une pluralité de prises électriques, ici deux 11A, 11B, et un boîtier 12. La prise 1 est associée à un identifiant noté ID_P1. Cet identifiant est inscrit sur le boîtier 12.

Le dispositif de commande 2 est intégré à l'intérieur du boîtier 12. Il comprend
- un module 20 de communication à travers un réseau de téléphonie mobile 3, ici le réseau GSM ;
- une interface 21 de communication radio de courte distance, adaptée pour mettre en œuvre ici le protocole ZigBee ;
- un module 22 de réception et d'envoi de messages à travers le réseau de téléphonie mobile 3, ici des messages SMS ;
- un module 23 de traitement de messages reçus à travers le réseau de téléphonie mobile 3 ;
- un module 24 d'édition de messages à envoyer à travers le réseau de téléphonie mobile 3 ;
- un module 25 d'exécution de commandes ou d'actions programmées ;
- un module d'appairage 26 ;
- une mémoire 27 ;
- un module de commutation ON/OFF 28
- une batterie d'alimentation, non représentée, rechargeable sur le secteur, et
- un processeur de commande 29.

En outre, la prise 1 comprend, sur le boîtier 12, un bouton de commutation ON/OFF (non représenté), connecté au module de commutation ON/OFF, pour allumer ou éteindre la prise 1.

Le module de communication 20 comprend, de façon classique, une interface de connexion radio au réseau de téléphonie mobile 3 et une carte SIM d'abonné au réseau de téléphonie mobile 3. La carte SIM est associée à des données d'identification dans le réseau de téléphonie mobile 3. Ces données d'identification comprennent un numéro de téléphone.

L'interface de communication radio 21 permet de connecter au dispositif de commande 2, par liaison radio de courte distance, des appareils électriques, notamment des prises électriques, pourvus d'une interface de communication radio compatible. Une fois l'appareil électrique connecté, le dispositif de commande 2 de la prise principale 1 peut communiquer par liaison radio avec l'appareil électrique. L'interface de communication radio 21 est ici adaptée pour utiliser le protocole de communication ZigBee. On pourrait envisager l'utilisation d'un autre protocole de communication radio. L'interface de communication radio 21 mémorise un identifiant de réseau local ID_LAN et une clé réseau partagée de sécurité K, permettant de chiffrer et de déchiffrer les données échangées entre la prise 1 et un appareil connecté en réseau.

Le module 22 est adapté pour émettre et recevoir des messages, ici des messages SMS, à travers le réseau de téléphonie mobile 3, et pour transmettre les messages SMS reçus au module de traitement 23. Lorsque la prise 1 est raccordée pour la première fois au secteur, le module 22 est configuré pour émettre automatiquement un message SMS pré-enregistré vers un numéro de téléphone prédéfini. L'envoi de ce message SMS permet de forcer la connexion au réseau de téléphonie mobile 3 dès que la prise 1 est raccordée au secteur.

Le module de traitement 23 est adapté pour interpréter les messages SMS reçus et pour, le cas échéant, commander l'exécution de commandes contenues dans ces messages. Le tableau ci-après liste différents types de messages, susceptibles d'être traités par le module 23 :

| **Contenu du message** | **Commande à exécuter** |
|---|---|
| START | démarrage du système domotique |
| DETECT | mise en mode d'appairage |
| ADD [*numéro de téléphone du terminal à ajouter*] | ajout d'un terminal de pilotage secondaire |
| SUP [*numéro de téléphone du terminal à ajouter* | suppression d'un terminal de pilotage secondaire |
| ON *[identifiant de prise]* | Mise en marche d'une prise (ou multiprise) |
| OFF *[identifiant de prise]* | Arrêt d'une prise (ou multiprise) |
| LOCK *[identifiant de prise]* | verrouillage d'une prise en mode ON |
| UNLOCK *[identifiant de prise]* | déverrouillage d'une prise préalablement verrouillée en mode ON |
| MUTE | suppression des alertes |
| STOP MUTE | reprise des alertes |
| RESET | effacement des données de configuration du dispositif de commande |

En outre, chaque message SMS reçu contient, de façon classique, le numéro de téléphone du terminal mobile ayant émis ce message SMS.

Ces différents messages seront davantage explicités plus loin dans la description du procédé.

Le module 25 est agencé pour commander l'exécution de commandes contenues dans des messages SMS reçus ou d'actions programmées. Ces actions programmées peuvent comprendre notamment :
- la relève de la consommation électrique d'un appareil électrique branché à une prise électrique et l'envoi d'un message de notification de cette consommation à au moins un terminal à travers le réseau de téléphonie mobile 3 ;
- la détection d'une interruption de l'alimentation électrique d'une prise et l'envoi d'un message de notification de cette interruption à au moins un terminal de pilotage à travers le réseau de téléphonie mobile 3 ;
- la détection d'une reprise de l'alimentation électrique suite à une interruption et l'envoi d'un message de notification de cette reprise à au moins un terminal de pilotage à travers le réseau de téléphonie mobile 3 ;
- l'effacement de données de configuration du dispositif de commande de la prise.

Les messages de notification, ou d'alerte, sont ici des messages SMS.

Le terminal destinataire de ces messages de notification, ou d'alerte, est le terminal de pilotage principal, ayant le rôle d'administrateur et dont le numéro de téléphone est enregistré dans la mémoire 23 lors d'une étape de configuration qui sera décrite plus loin dans la description du procédé. Les messages de notification peuvent aussi être envoyés à un (ou plusieurs) terminal de pilotage secondaire dont le numéro de téléphone est enregistré dans la mémoire 27.

Le module 24 d'édition de messages est agencé pour créer, ou éditer, les messages SMS de notification ou d'alerte à envoyer, à travers le réseau de téléphonie mobile 3, vers un terminal de pilotage dont le numéro de téléphone a été enregistré dans la mémoire 23. Ces messages d'alerte peuvent notamment comprendre :
- des messages de notification de la consommation électrique d'un appareil électrique branché à une prise électrique ;
- des messages de notification d'une interruption de l'alimentation électrique ;
- des messages de notification d'une reprise de l'alimentation électrique suite à une interruption, etc.

On pourrait envisager d'autres types de messages d'alerte.

Le module d'appairage 26 est agencé pour commander l'exécution d'une opération d'appairage de la prise principale 1 avec une prise secondaire. L'appairage vise à connecter la prise secondaire à la prise principale 1, et plus précisément au dispositif de commande 2 de la prise 1, par liaison radio, afin de mettre en réseau la prise secondaire avec le système domotique. Une fois connectée, la prise secondaire peut communiquer par liaison radio avec la prise principale 1. Dans l'exemple particulier décrit ici, les prises en réseau utilisent le protocole de communication ZigBee.

La mémoire 27 est destinée à mémoriser des données de configuration pouvant comprendre :
- le numéro de téléphone d'un terminal de pilotage principal, ce numéro étant associé en mémoire à l'indication « administrateur » selon laquelle le rôle d'administrateur a été attribué à ce terminal de pilotage ;
- le numéro de téléphone d'un (ou de plusieurs) terminal de pilotage secondaire, ce numéro étant associé en mémoire à l'indication « utilisateur » selon laquelle le rôle d'utilisateur a été attribué à ce terminal de pilotage ;
- une indication « LOCK » associée à un identifiant de prise, selon laquelle la prise identifiée est verrouillée en mode ON ;
- une indication « MUTE », selon laquelle les messages d'alerte ou de notification ne doivent pas être émis.

Le module de commutation ON/OFF 28 permet d'allumer ou d'éteindre la prise 1.

La batterie d'alimentation est destinée à alimenter électriquement le dispositif de commande 2 en cas d'interruption de l'alimentation électrique par le secteur. Elle se recharge lorsque la prise est alimentée électriquement par le secteur.

Le module de commande 29, auquel tous les éléments de la prise 1 sont reliés, est agencé pour contrôler le fonctionnement de la prise 1.

Un terminal de pilotage peut commander diverses actions au niveau de la prise principale 1 ou d'une prise secondaire, par l'envoi de messages SMS de commande à la prise 1, ces messages SMS étant reçus et traités par le dispositif de commande intégré 2. Les actions autorisées pour un terminal de pilotage dépendent du rôle ou statut de ce terminal, selon qu'il est « administrateur » ou « utilisateur ». Dans l'exemple particulier décrit ici, un terminal administrateur est autorisé à commander toutes les actions précédemment listées dans le tableau, alors qu'un terminal utilisateur est autorisé à commander les actions de mise en marche/d'arrêt, verrouillage/déverrouillage en mode ON d'une prise, de suppression/reprise des alertes mais pas les actions .d'ajout/suppression d'un terminal de pilotage secondaire, ni d'effacement des données de configuration. On pourrait envisager une répartition différente des actions autorisées entre le terminal de pilotage administrateur et le ou les terminaux de pilotage utilisateurs.

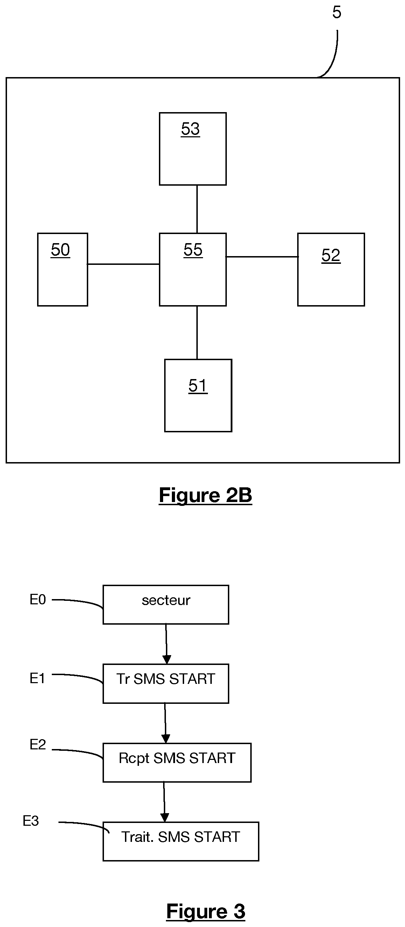

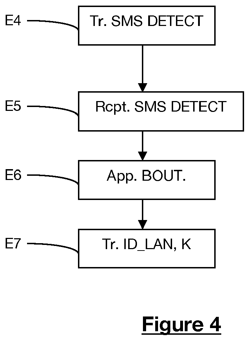

On va maintenant décrire, en référence aux figures 3 et 4, un mode de réalisation particulier du procédé d'installation du système domotique qui vient d'être décrit.

Lors d'une étape E0, un utilisateur raccorde la prise 1 au secteur. On suppose ici qu'il s'agit du premier raccordement de la prise 1 au secteur suite à sa sortie d'usine.

Le dispositif de commande 2 est alors alimenté électriquement, mis sous tension. Sur détection de cette première mise sous tension, il émet à travers le réseau de téléphonie mobile 3 un message SMS vers un numéro de téléphone pré-enregistré. Pour l'envoi de ce message SMS, le module de communication GSM 20 du dispositif 2 doit se connecter au préalable au réseau GSM 3. L'envoi du message SMS permet ainsi d'assurer au plus vite la connexion de la prise 1 au réseau de téléphonie mobile 3.

Ensuite, lors d'une étape de configuration E1, l'utilisateur envoie un message SMS de démarrage, contenant l'indication « START » dans le corps du message, à la prise 1 à l'aide d'un premier terminal de pilotage, ici un téléphone mobile 4, à travers le réseau de téléphonie mobile 3. Le message START contient, de façon classique, dans un champ émetteur de l'en-tête du message, le numéro de téléphone du téléphone mobile 4. Le message est envoyé à destination du numéro de téléphone associé à la prise 1 (plus précisément à la carte SIM intégrée dans la prise 1).

Lors d'une étape E2, le message START de démarrage est reçu par le dispositif de commande 2 de la prise 1. Le module de traitement 21 traite ensuite le message START lors d'une étape E3. Ce traitement consiste à activer le fonctionnement du dispositif de commande 2, à enregistrer le numéro de téléphone du téléphone 4 ayant émis ce message de démarrage, présent dans l'en-tête du message, dans la mémoire 27 et à attribuer un rôle d'administrateur au téléphone mobile 4 enregistré. Dans la mémoire 27, le numéro de téléphone du téléphone 4 est enregistré en association avec l'indication « administrateur ». Le rôle d'administrateur confère au téléphone 4, dit terminal principal, des droits spécifiques tels que notamment le droit d'ajouter ou de supprimer un terminal de pilotage secondaire, le droit de remettre à zéro (RESET) le dispositif de commande 2 et le droit de commander une mise en mode d'appairage du dispositif de commande 2. En outre, le téléphone administrateur 4 dispose des mêmes droits qu'un terminal de pilotage utilisateur, comme précédemment explicité.

Le dispositif de commande 2 émet, à travers le réseau de téléphonie mobile 3, à destination du terminal principal enregistré, des messages SMS d'alerte ou de notification relatifs à la prise 1, tels que ceux précédemment décrits.

Le système domotique peut également comprendre une ou plusieurs prises secondaires connectées en réseau, ici par liaison radio, à la prise principale 1 intégrant le dispositif de commande 2. A titre d'exemple illustratif, on va décrire ci-après les étapes de mise en réseau d'une prise secondaire 5.

La prise secondaire 5 est ici un boîtier multiprise comportant plusieurs prises électriques, par exemple deux prises. La prise secondaire 5 intègre, à l'intérieur de son boîtier,
- une interface 50 de communication radio courte distance, ici apte à mettre en œuvre le protocole de communication ZigBee,
- un module de commutation ON/OFF 51 ;
- un module 52 de relève de la consommation électrique ;
- une mémoire 53 et
- un module de commande 55.

Un bouton d'appairage et un bouton de commutation, non représentés, sont prévus sur le boîtier de la prise 5. La prise secondaire 5 est associée à un identifiant, noté ID_P2, inscrit sur le boîtier de la prise 5 et enregistré dans la mémoire 53. Le module de commutation ON/OFF 51 permet d'allumer ou d'éteindre la prise 5. Le module 52 est agencé pour mesurer la consommation électrique du ou des appareils électriques branchés sur la prise 5. Le module de commande 55, auquel tous les éléments de la prise 5 sont connectés, est agencé pour contrôler le fonctionnement de la prise 5.

Lors d'une étape E4, le terminal principal 4 transmet un message SMS de commande d'appairage, contenant l'indication « DETECT », au dispositif de commande 2 de la prise 1, à travers le réseau de téléphonie mobile 3.

Lors d'une étape E5, le dispositif de commande 2 reçoit le message SMS de commande d'appairage et vérifie que ce message a été émis par le terminal 4 ayant le rôle d'administrateur. Cette vérification s'effectue par comparaison du numéro de téléphone de l'émetteur du message SMS (présent dans l'en-tête du message) et du numéro de téléphone associé au terminal administrateur en mémoire 27. Si la vérification est positive, le dispositif de commande 2 se met en mode d'appairage (ou d'association) pendant une durée T prédéfinie. Si la vérification est négative, le mode d'appairage n'est pas déclenché.

En mode d'appairage, l'interface de communication radio ZigBee 21 de la prise 1 se met à l'écoute de signaux radio en provenance d'un équipement à appairer. Lors d'une étape E6, pendant la durée T, l'utilisateur appuie sur le bouton d'appairage 51 de la prise secondaire 5. Lors d'une étape E7, une session point à point s'établit entre le dispositif de commande 2 et la prise secondaire 5 et, lors de cette session, le dispositif de commande 2 transmet à la prise secondaire 5 des données d'accès au réseau local du système domotique, comprenant ici l'identifiant réseau ID_LAN et la clé réseau partagée de sécurité K. L'identifiant ID_LAN et la clé K sont enregistrés dans la mémoire 53. Lors de l'appairage, le dispositif de commande 2 reçoit l'identifiant ID_P2 de la prise 5 et l'enregistre dans sa mémoire 27. Le dispositif de commande 2 peut ensuite envoyer au terminal de pilotage 14 des messages SMS d'alerte, tels que ceux précédemment décrits, relatifs à la prise secondaire 5.

La prise secondaire 5, une fois associée à la prise principale 1, transmet régulièrement au dispositif de commande 2 de la prise principale 1, par liaison radio, des trames radio afin de signaler sa présence. Si le dispositif de commande 2 détecte qu'aucune trame radio n'a été reçue en provenance de la prise secondaire 5 pendant une durée supérieure à une durée maximale prédéfinie, il émet à destination du terminal de pilotage 4 une alerte d'interruption de l'alimentation électrique de la prise 5.

Sur requête du dispositif de commande 2, la prise secondaire 5 transmet au dispositif de commande 2 des informations relatives à la consommation du ou des appareils électriques branchés à la prise 5. Le dispositif de commande 2 peut ainsi émettre des alertes de suivi de consommation vers le terminal 4 à travers le réseau de téléphonie mobile 3.

On va maintenant décrire les opérations mises en œuvre suite à la réception des autres messages précédemment listés dans le tableau (ADD, SUPP, ON, OFF, LOCK, UNLOCK, MUTE, STOP MUTE, RESET).

### ADD et SUPP

Pour ajouter un terminal de pilotage secondaire, le terminal de pilotage administrateur 4 envoie à travers le réseau de téléphonie mobile 3, à destination du numéro de téléphone associé à la prise principale 1, un message SMS contenant l'indication ADD suivie du numéro de téléphone du terminal de pilotage secondaire à ajouter. Suite à la réception du message ADD, le dispositif de commande 2 de la prise 1 :
- vérifie que ledit message ADD a été émis par le terminal de pilotage 4 ayant le rôle d'administrateur ;
- si la vérification est positive, mémorise dans la mémoire 27 le numéro de téléphone du terminal secondaire à ajouter indiqué dans le message et
- attribue au terminal secondaire un rôle d'utilisateur.

Pour supprimer un terminal de pilotage secondaire, le terminal de pilotage principal (ou administrateur) 4 envoie à travers le réseau de téléphonie mobile 3, à destination du numéro de téléphone associé à la prise principale 1, un message SMS contenant l'indication SUPP suivie du numéro de téléphone du terminal de pilotage secondaire à supprimer. Suite à la réception du message SUPP, le dispositif de commande 2 de la prise 1 :
- vérifie que ledit message SUPP a été émis par le terminal 4 ayant le rôle d'administrateur et
- supprime de la mémoire 27 le numéro de téléphone du terminal secondaire à supprimer indiqué dans le message.

### ON et OFF

Pour allumer ou éteindre une prise à distance, à partir d'un terminal de pilotage (le terminal principal 4 ou un terminal secondaire), le terminal de pilotage envoie à travers le réseau de téléphonie mobile 3 à destination du numéro de téléphone associé à la prise principale 1 un message SMS contenant l'indication ON ou OFF, respectivement, et l'identifiant (ici ID_P1 ou ID_P2) de la prise concernée. Le dispositif de commande 2 reçoit ce message, l'interprète puis transmet au module de commutation de la prise identifiée une commande pour faire commuter la prise en mode ON (dans lequel la prise est allumée) ou en mode OFF (dans lequel la prise est éteinte), selon l'indication contenue dans le message.

### LOCK et UNLOCK

Pour verrouiller une prise en mode ON, à partir d'un terminal de pilotage (le terminal principal 4 ou un terminal secondaire), le terminal de pilotage envoie à travers le réseau de téléphonie mobile 3 à destination du numéro de téléphone associé à la prise principale 1 un message SMS contenant l'indication LOCK et l'identifiant (ID_P1 ou ID_P2) de la prise concernée. Le dispositif de commande 2 reçoit ce message, l'interprète puis transmet au module de commutation de la prise dont l'identifiant est présent dans le message une commande pour bloquer la prise en mode ON. Le bouton de commutation de la prise n'est alors plus opérationnel, il est inactif.

Pour déverrouiller la prise précédemment verrouillée en mode ON, l'un des terminaux de pilotage, principal 4 ou secondaire, envoie à travers le réseau de téléphonie mobile 3 à destination du numéro de téléphone associé à la prise principale 1 un message SMS contenant l'indication UNLOCK et l'identifiant (ID_P1 ou ID_P2) de la prise concernée à déverrouiller. Le dispositif de commande 2 reçoit ce message, l'interprète puis transmet au module de commutation de la prise identifiée une commande pour déverrouiller la prise (le bouton de commutation de la prise redevient alors opérationnel).

### MUTE et STOP MUTE

Pour faire cesser les messages d'alerte relatifs à une prise (principale 1 ou secondaire 5), dite prise cible, un terminal de pilotage (principal 4 ou secondaire) envoie à travers le réseau de téléphonie mobile 3 à destination du numéro de téléphone associé à la prise principale 1 un message SMS contenant l'indication MUTE et l'identifiant (ID_P1 ou ID_P2) de la prise cible. Le dispositif de commande 2 reçoit ce message, l'interprète puis transmet au module 25 l'indication MUTE et l'identifiant de la prise cible, afin de notifier au module 25 qu'il ne faut plus envoyer de messages d'alerte relatifs à cette prise.

Pour reprendre l'envoi des messages d'alerte relatifs à la prise précédemment mise en mode MUTE, un terminal de pilotage (principal 4 ou secondaire) envoie à travers le réseau de téléphonie mobile 3 à destination du numéro de téléphone associé à la prise principale 1 un message SMS contenant l'indication STOP MUTE et l'identifiant (ID_P1 ou ID_P2) de la prise cible. Le dispositif de commande 2 reçoit ce message, l'interprète puis transmet au module 25 l'indication STOP MUTE et l'identifiant de la prise cible, afin de notifier au module 25 qu'il peut reprendre l'envoi de messages d'alerte relatifs à cette prise.

### RESET

Le terminal de pilotage 4 ayant le rôle d'administrateur peut faire un RESET du dispositif de commande 2 en envoyant un message SMS contenant l'indication RESET à travers le réseau de téléphonie mobile 3 à destination du numéro de téléphone associé à la prise principale 1. L'opération de RESET consiste à effacer tous les enregistrements, paramétrages et configurations réalisés après la sortie d'usine de la prise principale 1.

Dans la description qui précède, le système domotique comprend une ou plusieurs prises électriques. D'une manière plus générale, le système domotique peut comprendre un premier appareil électrique intégrant un dispositif de commande et, éventuellement, un ou plusieurs deuxième(s) appareils électriques adaptés pour se connecter au dispositif de commande intégré dans le premier appareil électrique. Le raccordement du premier appareil électrique à une source d'alimentation électrique permet en même temps d'alimentation électriquement le dispositif de commande intégré.

## Revendications

1. Procédé d'installation d'un système domotique comprenant un premier appareil électrique (1) et un dispositif de commande (2), intégré dans ledit premier appareil électrique (1) et pourvu de moyens de connexion à un réseau de téléphonie mobile, dans lequel il est prévu les étapes suivantes, réalisées par le dispositif de commande (2), suite à un raccordement de l'appareil électrique à une source d'alimentation électrique :
- réception (E2), à travers le réseau de téléphonie mobile, d'un message de commande de démarrage en provenance d'un premier terminal de pilotage, ledit message commandant un démarrage du système domotique et contenant un numéro de téléphone associé au premier terminal,
- traitement du message de commande de démarrage, comprenant :
∘ activation du fonctionnement du dispositif de commande ;
∘ mémorisation (E3) du numéro de téléphone dudit premier terminal de pilotage ;
∘ attribution (E3) d'un rôle d'administrateur du système domotique au premier terminal de pilotage ;
et dans lequel, suite à la réception d'un message de commande d'appairage à travers le réseau de téléphonie mobile (E5) transmis par le premier terminal ayant le rôle d'administrateur, le dispositif de commande (2) se met en mode d'appairage, établit une session de communication avec un deuxième appareil électrique (5) et, lors de cette session, transmet au deuxième appareil (5) des données d'accès au réseau local du système domotique.

2. Procédé selon la revendication 1, dans lequel, suite à la réception par le dispositif de commande (2), à travers le réseau de téléphonie mobile, d'un message d'ajout d'un deuxième terminal de pilotage, ledit message contenant un numéro de téléphone associé au deuxième terminal, le dispositif de commande :
- vérifie que ledit message d'ajout a été émis par le premier terminal ayant le rôle d'administrateur ;
- mémorise le numéro de téléphone du deuxième terminal et
- attribue au deuxième terminal un rôle d'utilisateur.

3. Procédé selon la revendication 1, dans lequel, lors du premier raccordement électrique du système domotique à une source d'alimentation, le dispositif de commande (2) envoie automatiquement un message à travers le réseau de téléphonie mobile, afin d'assurer une connexion audit réseau mobile.

4. Procédé selon la revendication 1, dans lequel le message de commande est un message SMS.

5. Procédé selon la revendication 1, dans lequel le premier appareil électrique est une prise électrique (1).

6. Système domotique comprenant un premier appareil électrique commandé (1) et adapté pour être raccordé à une source d'alimentation électrique et un dispositif de commande (2) intégré dans le premier appareil électrique et pourvu de moyens de connexion à un réseau de téléphonie mobile, ledit dispositif de commande (2) comprenant :
- des moyens (20, 22) de réception, à travers le réseau de téléphonie mobile, de messages de commande en provenance d'un premier terminal de pilotage,
- des moyens (23) de traitement de messages de commande, agencés pour :
∘ sur réception d'un message de commande de démarrage, ledit message commandant un démarrage du système domotique et contenant un numéro de téléphone associé au premier terminal, activer le fonctionnement du dispositif de commande, mémoriser le numéro de téléphone dudit premier terminal de pilotage et attribuer un rôle d'administrateur du système domotique au premier terminal de pilotage ;
∘ sur réception d'un message de commande d'appairage transmis par le premier terminal ayant le rôle d'administrateur, commander des moyens d'appairage ;
- lesdits moyens d'appairage (26) agencés pour se mettre en mode d'appairage, établir une session de communication avec un deuxième appareil électrique et, lors de cette session, transmettre au deuxième appareil électrique des données d'accès au réseau local du système domotique.

7. Système domotique selon la revendication 6, dans lequel, le dispositif de commande (2) comprend des moyens (23) pour, suite à la réception, à travers le réseau de téléphonie mobile, d'un message d'ajout d'un deuxième terminal de pilotage, ledit message contenant un numéro de téléphone associé au deuxième terminal :
- vérifier que ledit message d'ajout a été émis par le premier terminal ayant le rôle d'administrateur ;
- mémoriser le numéro de téléphone du deuxième terminal et
- attribuer au deuxième terminal un rôle d'utilisateur.

8. Système selon la revendication 6, dans lequel le premier appareil électrique est une prise électrique (1).

9. Appareil électrique apte à être commandé (1) et adapté pour être raccordé à une source d'alimentation électrique, l'appareil incluant un dispositif de commande (2) pourvu de moyens de connexion à un réseau de téléphonie mobile, ledit dispositif de commande (2) comprenant :
- des moyens (20, 22) de réception, à travers le réseau de téléphonie mobile, de messages de commande en provenance d'un premier terminal de pilotage,
- des moyens (23) de traitement de messages de commande, agencés pour :
∘ sur réception d'un message de commande de démarrage, ledit message commandant un démarrage du système domotique et contenant un numéro de téléphone associé au premier terminal, activer le fonctionnement du dispositif de commande, mémoriser le numéro de téléphone dudit premier terminal de pilotage et attribuer un rôle d'administrateur de l'appareil électrique au premier terminal de pilotage ;
∘ sur réception d'un message de commande d'appairage transmis par le premier terminal ayant le rôle d'administrateur, commander des moyens d'appairage ;
- lesdits moyens d'appairage (26) agencés pour se mettre en mode d'appairage, établir une session de communication avec un deuxième appareil électrique et, lors de cette session, transmettre au deuxième appareil électrique des données d'accès au réseau local du système domotique.

## Patentansprüche

1. Verfahren zum Einbau eines Hausautomatisierungssystems, das ein erstes elektrisches Gerät (1) und eine integrierte Steuervorrichtung (2) enthält, die in das erste elektrisches Gerät (1) integriert ist und mit Verbindungseinrichtungen mit einem Mobiltelefonnetz versehen ist, bei dem die folgenden von der Steuervorrichtung (2) nach einem Anschluss des elektrischen Geräts an eine Stromversorgungsquelle durchgeführten Schritte vorgesehen sind:
- Empfang (E2), über das Mobiltelefonnetz, einer von einem ersten Steuer-Endgerät kommenden Startsteuerungsnachricht, wobei die Nachricht einen Start des Hausautomatisierungssystems steuert und eine dem Endgerät zugeordnete Telefonnummer enthält,
- Verarbeitung der Startsteuerungsnachricht, die enthält:
o Aktivierung des Betriebs der Steuervorrichtung;
o Speichern (E3) der Telefonnummer des ersten Steuer-Endgeräts;
o Zuweisung (E3) einer Administrator-Funktion des Hausautomatisierungssystems zum ersten Steuer-Endgerät;
und wobei die Steuervorrichtung (2) sich nach dem Empfang einer vom ersten Endgerät, das die Administrator-Funktion hat, über das Mobiltelefonnetz (E5) übertragenen Pairing-Steuerungsnachricht in den Pairing-Modus versetzt, eine Kommunikationssitzung mit einem zweiten elektrischen Gerät (5) aufbaut, und bei dieser Sitzung Zugangsdaten zum lokalen Netz des Hausautomatisierungssystems an das zweite Gerät (5) überträgt.

2. Verfahren nach Anspruch 1, wobei nach dem Empfang, durch die Steuervorrichtung (2) über das Mobiltelefonnetz, einer Hinzufügungsnachricht eines zweiten Steuer-Endgeräts, wobei die Nachricht eine dem zweiten Endgerät zugeordneten Telefonnummer enthält, die Steuervorrichtung:
- überprüft, dass die Hinzufügungsnachricht von dem ersten Endgerät gesendet wurde, das die Administrator-Funktion hat;
- die Telefonnummer des zweiten Endgeräts speichert und
- dem zweiten Endgerät eine Benutzer-Funktion zuweist.

3. Verfahren nach Anspruch 1, wobei, beim ersten elektrischen Anschluss des Hausautomatisierungssystems an eine Versorgungsquelle, die Steuervorrichtung (2) automatisch eine Nachricht über das Mobiltelefonnetz schickt, um eine Verbindung mit dem Mobilnetz zu gewährleisten.

4. Verfahren nach Anspruch 1, wobei die Steuerungsnachricht eine SMS-Nachricht ist.

5. Verfahren nach Anspruch 1, wobei das erste elektrische Gerät ein Netzstecker (1) ist.

6. Hausautomatisierungssystem, das ein erstes elektrisches Gerät (1), das gesteuert wird und geeignet ist, an eine Stromversorgung angeschlossen zu werden, und eine Steuervorrichtung (2) enthält, die in das erste elektrische Gerät integriert und mit Verbindungseinrichtungen mit einem Mobiltelefonnetz versehen ist, wobei die Steuervorrichtung (2) enthält:
- Einrichtungen (20, 22) zum Empfang, über das Mobiltelefonnetz, von von einem ersten Steuer-Endgerät kommenden Steuernachrichten,
- Einrichtungen (23) zur Verarbeitung von Steuernachrichten, die eingerichtet sind, um:
∘ bei Empfang einer Startsteuerungsnachricht, wobei die Nachricht einen Start des Hausautomatisierungssystem steuert und eine dem ersten Endgerät zugeordnete Telefonnummer enthält, den Betrieb der Steuervorrichtung zu aktivieren, die Telefonnummer des ersten Steuer-Endgeräts zu speichern und dem ersten Steuer-Endgerät eine Administrator-Funktion des Hausautomatisierungssystems zuzuweisen;
∘ bei Empfang einer Pairing-Steuerungsnachricht, die vom ersten Endgerät übertragen wird, das die Administrator-Funktion hat, Pairing-Einrichtungen zu steuern;
- wobei die Pairing-Einrichtungen (26) eingerichtet sind, um sich in den Pairing-Modus zu versetzen, eine Kommunikationssitzung mit einem zweiten elektrischen Gerät aufzubauen, und während dieser Sitzung an das zweite elektrische Gerät Zugangsdaten zum lokalen Netz des Hausautomatisierungssystems zu übertragen.

7. Hausautomatisierungssystem nach Anspruch 6, wobei die Steuervorrichtung (2) Einrichtungen (23) enthält, um nach dem Empfang über das Mobiltelefonnetz einer Hinzufügungsnachricht eines zweiten Steuer-Endgeräts, wobei die Nachricht eine dem zweiten Endgerät zugeordnete Telefonnummer enthält:
- zu überprüfen, dass die Hinzufügungsnachricht von dem ersten Endgerät gesendet wurde, das die Administrator-Funktion hat;
- die Telefonnummer des zweiten Endgeräts zu speichern; und
- dem zweiten Endgerät eine Benutzer-Funktion zuzuweisen.

8. System nach Anspruch 6, wobei das erste elektrische Gerät ein Netzstecker (1) ist.

9. Elektrisches Gerät (1), das gesteuert werden kann und geeignet ist, an eine Stromversorgungsquelle angeschlossen zu werden, wobei das Gerät eine Steuervorrichtung (2) umfasst, die mit Verbindungseinrichtungen mit einem Mobiltelefonnetz versehen ist, wobei die Steuervorrichtung (2) enthält:
- Einrichtungen (20, 22) zum Empfang, über das Mobiltelefonnetz, von von einem ersten Steuer-Endgerät kommenden Steuernachrichten,
- Einrichtungen (23) zur Verarbeitung von Steuernachrichten, die eingerichtet sind, um:
∘ bei Empfang einer Startsteuerungsnachricht, wobei die Nachricht einen Start des Hausautomatisierungssystems steuert und eine dem ersten Endgerät zugeordnete Telefonnummer enthält, den Betrieb der Steuervorrichtung zu aktivieren, die Telefonnummer des ersten Steuer-Endgeräts zu speichern und dem ersten Steuer-Endgerät eine Administrator-Funktion des elektrischen Geräts zuzuweisen,
∘ bei Empfang einer Pairing-Steuernachricht, die vom ersten Endgerät übertragen wird, das die Administrator-Funktion hat, Pairing-Einrichtungen zu steuern;
- wobei die Pairing-Einrichtungen (26) eingerichtet sind, sich in den Pairing-Modus zu versetzen, eine Kommunikationssitzung mit einem zweiten elektrischen Gerät aufzubauen, und während dieser Sitzung Zugangsdaten zum lokalen Netz des Hausautomatisierungssystems an das zweite elektrische Gerät zu übertragen.

## Claims

1. Method for installing a home automation system comprising a first electrical appliance (1) and a command device (2) integrated within said first electrical appliance (1) and provided with means for connection to a mobile telephony network, wherein the following steps are provided, performed by the command device (2) following connection of the electrical appliance to an electrical power source:
- receiving (E2), through the mobile telephony network, a start command message from a first control terminal, said message commanding the startup of the home automation system and containing a telephone number associated with the first terminal,
- processing the start command message, comprising:
∘ activating the operation of the command device;
∘ storing (E3) the telephone number of said first control terminal;
∘ assigning (E3) a role of administrator of the home automation system to the first control terminal;
and wherein, after receiving a pairing command message through the mobile telephony network (E5) transmitted by the first terminal having the role of administrator, the command device (2) goes into pairing mode, establishes a communication session with a second electrical appliance (5) and, during this session, transmits data for access to the local area network of the home automation system to the second appliance (5).

2. Method according to Claim 1, wherein, after the command device (2) receives, through the mobile telephony network, a message to add a second control terminal, said message containing a telephone number associated with the second terminal, the command device:
- verifies that said add message has been sent by the first terminal having the role of administrator;
- stores the telephone number of the second terminal; and
- assigns the second terminal a role of user.

3. Method according to Claim 1, wherein, when first electrically connecting the home automation system to a power source, the command device (2) automatically sends a message through the mobile telephony network in order to ensure connection to said mobile network.

4. Method according to Claim 1, wherein the command message is an SMS message.

5. Method according to Claim 1, wherein the first electrical appliance is an electrical outlet (1).

6. Home automation system comprising a first controlled electrical appliance (1) and suitable for being connected to an electrical power source and a command device (2) integrated within the first electrical appliance and provided with means for connection to a mobile telephony network, said command device (2) comprising:
- means (20, 22) for receiving, through the mobile telephony network, command messages from a first control terminal,
- means (23) for processing command messages, arranged for:
∘ on receiving a start command message, said message commanding startup of the home automation system and containing a telephone number associated with the first terminal, activating the operation of the command device, storing the telephone number of said first control terminal and assigning a role of administrator of the home automation system to the first control terminal;
∘ on receiving a pairing command message transmitted by the first terminal having the role of administrator, commanding pairing means;
- said pairing means (26) arranged to go into pairing mode, establish a communication session with a second electrical appliance and, during this session, transmit data for access to the local area network of the home automation system to the second electrical appliance.

7. Home automation system according to Claim 6, wherein the command device (2) comprises means (23) for, after receiving, through the mobile telephony network, a message to add a second control terminal, said message containing a telephone number associated with the second terminal:
- verifying that said add message has been sent by the first terminal having the role of administrator;
- storing the telephone number of the second terminal; and
- assigning the second terminal a role of user.

8. System according to Claim 6, wherein the first electrical appliance is an electrical outlet (1).

9. Electrical appliance (1) suitable for being controlled and suitable for being connected to an electrical power source, the appliance including a command device (2) provided with means for connection to a mobile telephony network, said command device (2) comprising:
- means (20, 22) for receiving, through the mobile telephony network, command messages from a first control terminal,
- means (23) for processing command messages, arranged for:
∘ on receiving a start command message, said message commanding startup of the home automation system and containing a telephone number associated with the first terminal, activating the operation of the command device, storing the telephone number of said first control terminal and assigning a role of administrator of the electrical appliance to the first control terminal;
∘ on receiving a pairing command message transmitted by the first terminal having the role of administrator, commanding pairing means;
- said pairing means (26) arranged to go into pairing mode, establish a communication session with a second electrical appliance and, during this session, transmit data for access to the local area network of the home automation system to the second electrical appliance.
